(19) Europäisches Patentamt
European Patent Office
Office européen des brevets

(11) **EP 2 359 032 B1**

(12) **EUROPEAN PATENT SPECIFICATION**

(45) Date of publication and mention
of the grant of the patent:
**30.01.2019 Bulletin 2019/05**

(51) Int Cl.:
**F16H 61/02** *(2006.01)*     **F16H 63/42** *(2006.01)*
**G07C 5/08** *(2006.01)*     **G09B 19/16** *(2006.01)*

(21) Application number: **09827823.7**

(22) Date of filing: **10.11.2009**

(86) International application number:
**PCT/SE2009/051281**

(87) International publication number:
**WO 2010/059110 (27.05.2010 Gazette 2010/21)**

(54) **GEAR FEEDBACK SYSTEM**

GETRIEBEFEEDBACKSYSTEM

SYSTÈME DE RÉTROACTION POUR RAPPORT DE TRANSMISSION

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **21.11.2008 SE 0850087**

(43) Date of publication of application:
**24.08.2011 Bulletin 2011/34**

(73) Proprietor: **Scania CV AB (publ)**
**151 87 Södertälje (SE)**

(72) Inventors:
• **ANDERSSON, Jonny**
**S-151 68 Södertälje (SE)**
• **BREDBERG, Linus**
**S-151 46 Södertälje (SE)**

(74) Representative: **Scania CV AB**
**Patents, GP 117kv**
**151 87 Södertälje (SE)**

(56) References cited:
**EP-A1- 1 775 501    US-A- 4 439 158
US-A- 5 758 299**

**Description**

Field of the invention

The present invention relates to a gear feedback system according to the preamble of the independent claim.

Background of the invention

When driving heavy vehicles, such as trucks, buses and the like, the vehicle economy has become an important factor when trying to reduce costs in the business in which the vehicle is used. Today there is also a heavy focus on reducing fuel consumption because of negative environmental effects coming from fuel combustion.

The driver has, by his/her way of conveying the vehicle, the greatest influence, both from an economical and from an environmental point of view. It may thus be difficult for a driver to determine which gear that is optimal from a fuel consumption view in different situations. There are often at least two, from a rotational speed-perspective, suitable gears to choose from when the vehicle is conducted. The difficulty for the driver is to know which one of these gears that will make the motor work in a most efficient way and thereby also in the most economical way.

Many heavy vehicles are equipped with a semi automatic gear system (e.g. Scania Opticruise or Volvo I-Shift) that is making the choice for the driver. These systems are generally also involving the possibility for the driver to choose a gear by himself, as of course is the case also for trucks equipped with fully manual gear boxes. At manual change of gear it is important for the fuel economy that the driver has exactly the optimal gear.

It is known to use a gear shift indicator to indicate which gear that is the most suitable from a fuel consumption point of view. See e.g. the teaching indicator for efficient vehicle gearshift operation disclosed in the US patent 4,439,158, or the device to provide an indication to the driver whether a gear change should be made to obtain a better fuel consumption, disclosed in the GB patent application 2,084,524. The indicator may be visual information to the driver in the meter display area, in the shape of e.g. a number indicating the preferred gear, or as a preferred rotational speed, e.g. as a green stripe at the tachometer that indicates suitable number of revolutions.

EP 1 775 501 A1 discloses a gear feedback system according to the preamble of claim 1. In this known system, the grade is determined by calculating a ratio of obedience to a shift change advice, for example, to a number of the advices given by the driving advice system at an appropriate timing. Therefore, the grade is dependent on the number of times the advice is obeyed and not obeyed.

The object of the present invention is to further encourage the driver to convey the vehicle in an economically and environmentally friendly way. A further aim is to give the driver, or a third part, the possibility to evaluate the driver's way of using the gears.

Summary of the invention

The above-mentioned object is achieved by a gear feedback system for use in a vehicle according to the invention, comprising a gear recommendation means adapted to determine an optimal gear value in dependence of various influencing parameters, e.g. weight of the vehicle, velocity, rotational speed, road topography, and based upon said optimal gear value to recommend an optimal gear of the vehicle, a gear sensing means for sensing a currently used gear and to determine a used gear value in dependence thereto. The system further comprises an evaluation means to analyse and grade the presently used gear, by comparing said currently used gear value with the optimal gear value and based on the comparison generate a grade, and a presentation means to present said grade to the driver of the vehicle.

The present invention gives the driver a tool to use in his/her strives to be the "best driver", and also provides the possibility for the driver to feel more secure knowing that he/she is driving with the most economically and environmentally friendly gear for the moment even if the vehicle in question has a manual gear box.

Furthermore, the grading of the gear choice gives the driver a possibility to follow-up if he/she has improved his/her ability to use correct gear in different situations and terrain.

Preferred embodiments are set forth in the dependent claims.

Short description of the appended drawings

Figure 1 schematically illustrates a control system for a vehicle where the present invention is utilized.
Figure 2 illustrates an example of a system according to the present invention.
Figure 3 illustrates an example of a presentation means according to the invention.

Detailed description of preferred embodiments of the invention

The present invention is applicable to motor vehicles provided with a manual mechanical transmission having a basic gear box and optionally at least one secondary gearbox, such as a range gearbox or a split gearbox. Especially heavy motor vehicles such as trucks, towing vehicles and busses mostly have both a split gearbox and a range gearbox. It is pointed out that "gearbox" is here to be interpreted broadly and the split part, the basic or main part and the range part of the transmission may be enclosed in the same gearbox housing.

It should also be pointed out that the present invention is in particular applicable to heavier vehicles, but may also be used in any motor vehicle, e.g. private cars, tractors etc.

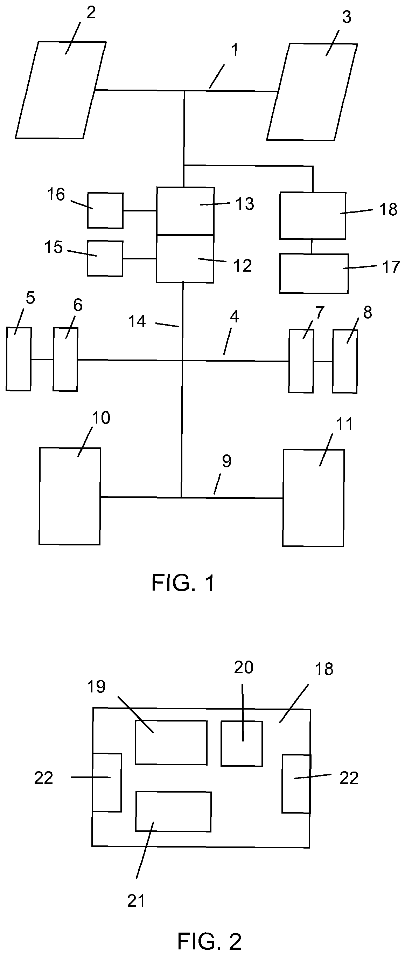

In fig. 1 is schematically illustrated a control system for a vehicle with which the present invention can be utilized. The vehicle comprises a front shaft 1 with steering wheels 2, 3, a rear drive shaft 4 with driving wheels 5-8, and optionally a rear shaft 9 with wheels 10 and 11. Furthermore, the vehicle contains an engine 13 connected to a gear box 12, which drives the drive shaft 4 by means of an output shaft 14 from the gear box. Gear box 12 and motor 13 are controlled by control units 15, 16, respectively, which are controlled by a main control unit 17. The Engine Management System (EMS) 16 controls the motor functions of the vehicle, which, for example, can consist of fuel injection and motor-brake. The control is based on a number of input signals, which can consist of signals from (not shown) throttle controls (the position of the accelerator pedal), speed sensor and brake management system. The Gearbox Management System (GMS) 15 controls the gear functions, wherein, when using an automatic gearbox, the gear shifting can be controlled based upon an input signal from speed sensors. In manual gear shifting, the shifting can be controlled from an input signal from a gear selector (gear shift lever), and no GMS may be needed. Furthermore, the vehicle contains a Brake Management System (BMS) with a break control unit 17, which controls the brake functions of the vehicle, such as automatic calculation of the load so that a given pedal position always can result in the same brake effect regardless of the load. The brake control unit controls the various brake systems of the vehicle, e.g. retarder and other supplementary brake systems, exhaust brake and service brake on the basis of commands from the driver, and sends control signals to system modules (not shown) dispersed on the chassis, where electrical control signals are used, e.g. to adjust brake pressure.

The above described control units constitute mere examples of what can exist in a vehicle. As is appreciated by a person skilled in the art, two or more of the above described control units can, of course, be integrated into one single control unit.

The present invention relates to a gear feedback system 18 including a gear recommendation means 19 to determine an optimal gear value of the vehicle in dependence of various influencing parameters, e.g. weight of the vehicle, velocity, rotational speed, road topography, and based upon said optimal gear value to recommend an optimal gear of the vehicle. The gear feedback system 18 is preferably arranged in a vehicle.

Each gear range is most efficient to operate at different pre-selected ranges of vehicle operation, and the selection of which particular gear range that will operate the vehicle most efficiently is determined in relationship to which power that is needed to convey the vehicle. Necessary power that is needed to convey the vehicle in constant speed is momentary calculated from the driving resistance. The driving resistance of the vehicle may be established by means of a suitable calculation model based on different parameters of the vehicle, such as engine load, engine rotational speed, vehicle speed, road inclination and aerodynamic characteristics, see e.g. WO/2007/139491, in a manner well-known to a person skilled in the art. If the vehicle accelerates, this acceleration contributes to an increased power demand of the vehicle and is accounted for when determining which gear that is most suitable. Allowed acceleration is thus limited to reasonable values to counteract reckless driving. Possible speed losses that appear at gear changes in uphill slopes are also accounted for, and the driver does not have to change gear down again to maintain enough torque to not loose too much velocity. The total power that is required to convey the vehicle is thus calculated as:

$$P_{total} = P(driving\_resistance) + P(acceleration),  \qquad (1)$$

where *P(driving_resistance)* is the power needed to convey the vehicle in constant speed, and *P(acceleration)* is the power needed to accelerate the vehicle to a certain acceleration.

The gear which best corresponds to the required total power is recommended to the driver.

The gear recommendation means 19 accordingly constantly senses the various influencing parameters, e.g. weight of the vehicle, velocity, rotational speed, road topography, and constantly calculates a required total power and compares the required power with the different gear intervals to check which gear that is the most optimal. If there is another, higher gear with a better rotational speed economy, which may contribute with necessary power to maintain the velocity, this gear is recommended instead. There is always a demand that recommended gear has to be in a certain dynamic rotational speed interval, depending on the conditions, to prevent recommending gears that otherwise would involve a too high or too low rotational speed of the motor.

Which gear that is the highest possible gear with the possibility to accelerate or maintain the velocity is continuously calculated. If no gear within the rotational speed limitations renders the acceleration possible, the lowest accessible gear within the rotational speed limitations is recommended instead. In steep uphill slopes where the vehicle is not capable of maintaining the velocity, "dragging out" is encouraged, i.e. to shift gear as late as possible to avoid driving with an uneconomical rotational speed. Possible speed losses that appear at gear changes in uphill slopes are accounted for, and the driver does not have to change gear down again to maintain enough torque to not loose too much velocity.

The gear feedback system 18 according to the present invention further includes a gear sensing means 20 for sensing a currently used gear and to determine a used gear value in dependence thereto. According to the invention an evaluation means 21 analyses and grades the currently used gear, by comparing the currently used gear value with the optimal gear value and based upon the comparison generate a grade. The generated grade is presented to the driver of the vehicle on a presentation means. Accordingly, the driver is encouraged to use the recommended gear, as the driver knows that the presently used gear is being graded. A potential effect of the grading of the driver is that different drivers may start to compete between each other in the ambition to be the "best driver". The presentation means is according to one embodiment placed on the driver's panel, well visible for the driver when conveying the vehicle. The presentation means may also be in the shape of an additional display in the driver's compartment.

The system 18 is illustrated in fig. 2, which includes means 22 for receiving relevant signals regarding surrounding parameters and signals from internal sensors in the vehicle, i.e. speed sensors, torque sensors, gear sensors etc, used in the gear recommendation means 19 to determine a recommended gear and in the evaluation means 21 to calculate a driver's gear grade.

Preferably positive grades are given to the driver when the driver has chosen the optimal gear for the situation, or has chosen a gear that is within a certain rotational speed interval

According to the invention, the grade depends on the time using a non-optimal gear, such that the grade is decreased if the non-optimal gear is used longer than a dynamic time duration. The feedback system then includes a time sensing means to start measuring the time with a time clock when it was determined that the driver was driving with a non-optimal gear. When this measured time exceeds a dynamic time duration, the grade is decreased. Thus, a decreased grade is given to the driver if he/she has driven the vehicle with a non-optimal gear for a certain time. According to the invention, the grade depends on the time using an optimal gear, such that the grade is increased if the optimal gear is used longer than a dynamic time duration. The feedback system then includes a time sensing means to start measuring the time with a time clock when it was determined that the driver was driving with an optimal gear. When this measured time exceeds a dynamic time duration, the grade is increased. Accordingly, the driver is rewarded if he/she maintains the optimal gear.

For example, if the 10th gear is the recommended gear for the moment and the rotational speed then is 1100 rpm, the driver obtains an increased grade if he/she has chosen this gear. If the driver instead uses the 9th gear a recommendation is given to the driver where he/she is encouraged to shift gear to the 10th gear. If the driver anyway chooses to continue with the 9th gear, his/her grade is started to be lowered after a certain dynamic time. If the driver instead would drive with the 12th gear (the highest gear) in 85 km/h, where gear 12 also is the recommended gear, the grade is either decreased or increased. This because a gear shift down to the 11th gear would cause the rotational speed to be outside the rotational speed interval. These embodiments are exemplified with a gear box with twelve (12) gears, but other kinds of gear boxes with less or more than twelve (12) gears are of course also practicable within the scope of the invention as defined by the appended claims.

Advantageously, the grade is presented at the presentation means at time periods decided by a presentation manager being an integrated part of the presentation means. Thus, it is possible to choose when the grade should be shown to the driver. The grade may also be presented as a change of grade. In one embodiment, the presentation manager determines the time periods in dependence of the relation between presently used gear and optimal gear. For example, if a driver uses a non-optimal gear longer than a dynamic time, then the grade is decreased after the dynamic time and the change in grade is presented at the presentation means.

In another embodiment, the grade is constantly presented at the presentation means. The driver then continuously can see how good he/she is at using the gears.

In one embodiment, the gear recommendation means 19 recommends an optimal gear to the driver, if a non-optimal gear is used longer than a dynamic time duration. Accordingly, recommendations about a preferred gear may be given to the driver when the driver has been driving with a non-recommended gear for a certain dynamic time. The gear recommendation means 19 then includes a time sensing means to start measuring the time with a time clock when it was determined that the driver was driving with a non-optimal gear. When this measured time exceeds a certain dynamic time duration, a recommendation is shown to the driver. According to one embodiment, the recommended optimal gear is presented at the presentation means. The recommended optimal gear may be presented on a display in numbers together with information about which action that is to be done, e.g. "Shift down" or "Shift up". The grading of the driver may be presented on the same display, or may be presented in another area or display.

The dynamic time until a recommendation is given may also depend on how many steps away from a recommended gear the driver has been driving, i.e. current gear minus recommended gear. Advantageously, if the driver has not changed gear according to the recommendations within a certain dynamic time duration, wherein the time is sensed by a time sensing means, the grade is decreased and information about the change in grade is presented at the presentation means. Thus, the presentation manager may decide time periods e.g. in dependence on when a recommendation has been presented on the presentation means.

The dynamic time is, according to one embodiment of the invention, also dependent on how important it is to make a gear shift. For example, if a driver demands a large torque from the motor e.g. in an uphill slope, the duration of the dynamic time is reduced to give a recommendation faster to the driver to change gear. Another example is if the driver greatly decreases the velocity of the vehicle in a short time. Then the dynamic time should also be reduced, to be able to give a fast recommendation to the driver. Accordingly, in one embodiment, the dynamic time duration depends on different gear- and/or energy criteria. Thus, the relationship between demanded power to maintain the speed and available power influences the time periods. If the demanded power is more than the available power, the dynamic time may be shorter to encourage the driver to change gear earlier. Accordingly, the dynamic time may be dependent on various parameters, e.g. brake energy, demanded motor energy, inclination of the road, velocity, rotational speed etc. Gear recommendations are not shown if the driver takes out a too high torque from the motor (typically at acceleration), with exception for if the driver accelerates with too low gears and is not using the total rotational speed spectrum, i.e. is driving in an uneconomical way, which may be the case if a driver e.g. accelerates in an uphill slope.

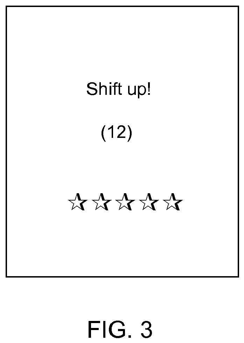

An example of how a presentation means may look like is shown in fig. 3. Recommendations are shown in the centre of a display as a gear number in brackets, optionally together with information about which action that would accomplish the recommended gear. Grades may be shown as stars that are illuminated or faded when a grade change occurs. For example, initially, the recommendation is shown with belonging action without stars. If the driver chooses to not follow the gear recommendation, the stars are illuminated (five grey stars means that the gear grade at the moment is about to be lowered). In the cases when the driver uses the correct gear nothing is shown (the grade is increased in the background).

In one embodiment, the determination of optimal gear is influenced by an estimated gear shift time. Thus, the time it takes for the driver to conduct a gear shift when driving the vehicle is estimated. This time depends inter alia on the type of gear box and which type that is needed to end up on the recommended gear (whole step-, split- or range gear). Accordingly, it is possible to make a reasonable determination if the potentially recommended gear still will be the best after the gear shift has been made.

The system 18 further includes all necessary computer programs and hardware to perform the necessary steps to give feedback to the driver according to the present invention.

The present invention is not limited to the above-described preferred embodiments. Various alternatives, modifications and equivalents may be used. Therefore, the above embodiments should not be taken as limiting the scope of the invention, which is defined by the appending claims.

## Claims

1. Gear feedback system (18) for use in a vehicle, comprising

   - a gear recommendation means (19) adapted to determine an optimal gear value in dependence of various influencing parameters, e.g. weight of the vehicle, velocity, rotational speed, road topography, and based upon said optimal gear value to recommend - - an optimal gear of the vehicle,
   a gear sensing means (20) for sensing a currently used gear and to determine a used gear value in dependence thereto,
   - an evaluation means (21) to analyse and grade the currently used gear, by comparing said currently used gear value with said optimal gear value and based upon the comparison generate a grade, and
   - a presentation means to present said grade to the driver of the vehicle,

   **characterized in**

   - **that** said grade depends on the time using a non-optimal gear, such that the grade is decreased if the non-optimal gear is used longer than a dynamic time duration, and
   - **that** said grade depends on the time using an optimal gear, such that the grade is increased if the optimal gear is used longer than a dynamic time duration.

2. Gear feedback system according to claim 1, wherein said grade is presented at said presentation means at time periods decided by a presentation manager being an integrated part of said presentation means.

3. Gear feedback system according to claim 2, wherein said presentation manager determines said time periods in dependence of the relation between presently used gear and optimal gear.

4. Gear feedback system according to claim 1, wherein said grade is constantly presented at said presentation means.

5. Gear feedback system according to claim 1, wherein said gear recommendation means (19) recommends an optimal gear to the driver, if a non-optimal gear is used longer than a dynamic time duration.

6. Gear feedback system according to claim 5, wherein said recommended optimal gear is presented at said presentation means.

7. Gear feedback system according to claim 5, wherein said dynamic time duration depends on different gear- and/or energy criteria.

8. Gear feedback system according to any of the preceding claims, wherein said determination of optimal gear is influenced by an estimated gear shift time.

9. Vehicle comprising a gear feedback system according to any of the preceding claims.

**Patentansprüche**

1. Gangrückmeldungssystem (18) zur Verwendung in einem Fahrzeug, umfassend:

   - ein Gangempfehlungsmittel (19), das dazu eingerichtet ist, einen optimalen Gangwert in Abhängigkeit von verschiedenen Einflussparametern, zum Beispiel einem Gewicht des Fahrzeugs, einer Geschwindigkeit, einer Drehzahl, einer Straßentopografie, zu bestimmen, und auf der Grundlage des optimalen Gangwerts einen optimalen Gang des Fahrzeugs zu empfehlen,
   - ein Gangdetektionsmittel (20) zum Detektieren eines gegenwärtig verwendeten Gangs und zum Bestimmen eines verwendeten Gangwerts in Abhängigkeit davon,
   - ein Auswertungsmittel (21) zum Analysieren und Bewerten des gegenwärtig verwendeten Gangs durch Vergleichen des gegenwärtig verwendeten Gangwerts mit dem optimalen Gangwert und zum Erzeugen einer Bewertung auf der Grundlage des Vergleichs, und
   - ein Darbietungsmittel zum Darbieten der Bewertung für den Fahrer des Fahrzeugs,

   **dadurch gekennzeichnet,**

   - **dass** die Bewertung derart von der Zeit abhängt, für die ein nicht optimaler Gang verwendet wird, dass die Bewertung verringert wird, falls der nicht optimale Gang länger als eine dynamische Zeitdauer verwendet wird, und
   - **dass** die Bewertung derart von der Zeit abhängt, für die ein optimaler Gang verwendet wird, dass die Bewertung erhöht wird, falls der optimale Gang länger als eine dynamische Zeitdauer verwendet wird.

2. Gangrückmeldungssystem gemäß Anspruch 1, wobei die Bewertung in Zeitspannen bei dem Darbietungsmittel dargeboten wird, die von einem Darbietungsmanager festgelegt sind, der ein integraler Bestandteil des Darbietungsmittels ist.

3. Gangrückmeldungssystem gemäß Anspruch 2, wobei der Darbietungsmanager die Zeitspannen in Abhängigkeit von der Beziehung zwischen momentan verwendetem Gang und optimalem Gang bestimmt.

4. Gangrückmeldungssystem gemäß Anspruch 1, wobei die Bewertung bei dem Darbietungsmittel laufend dargeboten wird.

5. Gangrückmeldungssystem gemäß Anspruch 1, wobei das Gangempfehlungsmittel (19) dem Fahrer einen optimalen Gang empfiehlt, falls ein nicht optimaler Gang länger als eine dynamische Zeitdauer verwendet wird.

6. Gangrückmeldungssystem gemäß Anspruch 5, wobei der vorgeschlagene optimale Gang bei dem Darbietungsmittel dargeboten wird.

7. Gangrückmeldungssystem gemäß Anspruch 5, wobei die dynamische Zeitdauer von unterschiedlichen Gang- und/oder Energiekriterien abhängt.

8. Gangrückmeldungssystem gemäß einem der vorhergehenden Ansprüche, wobei das Bestimmen des optimalen Gangs von einer geschätzten Gangschaltzeit beeinflusst ist.

9. Fahrzeug, umfassend ein Gangrückmeldungssystem gemäß einem der vorhergehenden Ansprüche.

**Revendications**

1. Système de rétroaction de rapport (18) à utiliser dans un véhicule, comprenant

   - un moyen de recommandation de rapport (19) destiné à déterminer une valeur de rapport optimal en fonction de divers paramètres d'influence, tels que le poids du véhicule, la vitesse, la vitesse de rotation, la topographie routière, et sur la base de ladite valeur de rapport optimal à recommander - - un rapport optimal du véhicule, un moyen de détection de rapport (20) pour détecter un rapport en cours d'utilisation et pour déterminer une valeur de rapport utilisée en conséquence,
   - un moyen d'évaluation (21) pour analyser et noter le rapport actuellement utilisé, en comparant ladite valeur de rapport en cours d'utilisation à ladite valeur de rapport optimal et en déterminant une note sur la base de cette comparaison, et
   - un moyen de présentation qui indique ladite note au conducteur du véhicule,

   **caractérisé en ce que**

   - ladite note dépend de la durée d'utilisation d'un rapport non optimal, de sorte que la note sera abaissée le rapport non optimal est utilisé pendant une durée supérieure à une durée dynamique, et
   - ladite note dépend de la durée d'utilisation d'un rapport optimal, de sorte que la note sera augmentée si le rapport optimal est utilisé pendant une durée supérieure à une durée dynamique.

2. Système de rétroaction de rapport selon la revendication 1, dans lequel ladite note est présentée sur le moyen de présentation à des moments décidés par un gestionnaire de présentation faisant partie intégrante dudit moyen de présentation.

3. Système de rétroaction de rapport selon la revendication 2, dans lequel ledit gestionnaire de présentation détermine lesdits moments en fonction de la relation entre le rapport en cours d'utilisation et le rapport optimal.

4. Système de rétroaction de rapport selon la revendication 1, dans lequel ladite note est présentée en permanence sur ledit moyen de présentation.

5. Système de rétroaction de rapport selon la revendication 1, dans lequel ledit moyen de recommandation de rapport (19) recommande un rapport optimal au conducteur si un rapport non optimal est utilisé pendant une durée supérieure à une durée dynamique.

6. Système de rétroaction de rapport selon la revendication 5, dans lequel ledit rapport optimal recommandé est présenté sur ledit moyens de présentation.

7. Système de rétroaction de rapport selon la revendication 5, dans lequel ladite durée dynamique dépend de différents critères de rapport et/ou d'énergie.

8. Système de rétroaction de rapport selon l'une quelconque des revendications qui précèdent, dans lequel ladite détermination du rapport optimal est influencée par un temps de passage de rapport estimé.

9. Véhicule comprenant un système de rétroaction de rapport selon l'une quelconque des revendications précédentes.

FIG. 1

FIG. 2

Shift up!

(12)

☆ ☆ ☆ ☆ ☆

FIG. 3

**EP 2 359 032 B1**

**REFERENCES CITED IN THE DESCRIPTION**

**Patent documents cited in the description**

- US 4439158 A
- GB 2084524 A
- EP 1775501 A1
- WO 2007139491 A